# EUROPÄISCHE PATENTSCHRIFT

(11) **EP 1 114 076 B1**
(45) Veröffentlichungstag und Bekanntmachung des Hinweises auf die Patenterteilung: **26.03.2003**
(21) Anmeldenummer: 99946124.7
(22) Anmeldetag: 04.09.1999
(51) Int. Cl.: C08G 59/62, C08G 59/68, C08G 18/32, C08G 18/18

(54) **BESCHLEUNIGER FÜR HÄRTBARE SYSTEME**
ACCELERATORS FOR HARDENABLE SYSTEMS
ACCELERATEURS DESTINES A DES SYSTEMES DURCISSABLES

(30) Priorität: 14.09.1998 CH 186698; 22.10.1998 CH 213698
(43) Veröffentlichungstag der Anmeldung: 11.07.2001
(73) Patentinhaber: Vantico AG, 4057 Basel (CH)
(72) Erfinder: WIESENDANGER, Rolf, CH-4125 Riehen (CH); FISCHER, Walter, CH-4153 Reinach (CH); DOBINSON, Bryan, Guildford, Surrey GU4 8EE (GB)
(74) Vertreter: Dannappel, Hans-Jochen, Dr.
(86) Internationale Anmeldenummer: EP9906520
(87) Internationale Veröffentlichungsnummer: WO00015687

(56) Entgegenhaltungen:
- EP-A- 0 684 268
- WO-A-98/15588

## Beschreibung

Die vorliegende Erfindung betrifft als Beschleuniger für härtbare Epoxy- und Polyurethan-Systeme wirksame Verbindungen. Insbesondere betrifft die Erfindung neue Verbindungen, welche als Umsetzungsprodukte von im weiteren beschriebenen Mannichbasen mit ausgewählten Aminen mittels Transaminierung erhalten werden und als Beschleuniger in härtbaren Epoxy- und Polyurethan-Systemen einsetzbar sind.

Zahlreiche härtbare Epoxy-Systeme sind bekannt. Für gewisse Anwendungen besitzen diese Systeme allerdings den Nachteil, dass sie bei verhältnismässig tiefen Temperaturen, das heisst bei 5°C oder tiefer, zu langsam aushärten. Bei gleichzeitiger relativ hoher Luftfeuchtigkeit hat dies beispielsweise zur Folge haben, dass Anstriche bzw. Filme ungenügender Qualität, beispielsweise hinsichtlich der Flexibilität, des Geruchs, des Glanzes oder der Klebrigkeit, erhalten werden. Es wurde nun gefunden, dass die im weiteren beschriebenen erfindungsgemässen neuen Verbindungen ausgezeichnet als Beschleuniger in härtbaren Epoxy- und Polyurethan-Systemen einsetzbar sind, wobei die Härtungsgeschwindigkeit der genannten Systeme bei niedrigen Temperaturen von bis zu -5°C derart erhöht wird, dass der beschriebene nachteilige Einfluss hoher Luftfeuchtigkeit weitgehend oder gänzlich überwunden wird. Die erfindungsgemässen Verbindungen besitzen zusätzlich den Vorteil, dass sie niedermolekular sind und eine vergleichsweise niedrige Viskosität aufweisen. Sie sind deshalb gut mit den Verbindungen der härtbaren Systeme mischbar und beeinflussen die Eigenschaften der ausgehärteten Systeme positiv. Zudem werden die erfindungsgemässen Beschleuniger in den ausgehärteten Systemen chemisch gebunden, d.h. dass diese erfindungsgemässen Verbindungen in wesentlich höheren Konzentrationen eingesetzt werden können. Dies ist fundamental wichtig bei tiefen Temperaturen (<5°C) und derzeit mit bekannten Beschleunigern nicht erreichbar. Letztere werden nicht mitvernetzt und machen das Netzwerk bei höheren Konzentrationen unbrauchbar.

Die vorliegende Erfindung ist in den Patentansprüchen definiert. Insbesondere betrifft die vorliegende Erfindung als Beschleuniger wirkende Verbindungen für härtbare Epoxy- und Polyurethan-Systeme, welche dadurch gekennzeichnet sind, dass diese Verbindungen mittels einer Transaminierungsreaktion durch Umsetzung
(a) einer substituierten phenolischen Verbindung (Mannichbase), welche mindestens einen Substituenten der Formel

   R₁(R₂)N-CH(R₃)- (A)

   aufweist, worin R₁ und R₂ unabhängig voneinander lineares oder verzweigtes C₁₋C₄-Alkyl und R₃ Wasserstoff, Methyl, Ethyl oder Phenyl bedeuten, mit
(b) einer Verbindung der Formel

   R₄(R₅)N-CₙH₂ₙ-(NH-CₙH₂ₙ)_{q}-NH₂ (B),
worin R₄ und R₅ unabhängig voneinander C₁₋₆Alkyl bedeuten oder gemeinsamen eine Rest der Formel -(CH₂)₅- oder -(CH₂)₂-O-(CH₂)₂- bilden, n eine ganze Zahl von 2 bis 5 und q Null, 1, 2 oder 3 bedeuten,
hergestellt werden, und die erhaltene Verbindung bzw. die im erhaltenen Gemisch vorliegenden Verbindungen pro Molekül durchschnittlich mindestens einen Substituenten der Formel

(R₄)(R₅)N-CₙH₂ₙ-(NH-CₙH₂ₙ)_{q}-NH-CH(R₃)-

aufweisen, worin die Substituenten R₃, R₄, R₅, n und q die oben angegebenen Bedeutung haben.

Die vorliegende Erfindung betrifft im weiteren ein Verfahren zur Herstellung der erfindungsgemässen als Beschleuniger wirkenden Verbindungen, welches dadurch gekennzeichnet ist, dass man mittels einer Transaminierungsreaktion (a) eine substituierte phenolische Verbindung (Mannichbase), welche mindestens einen Substituenten der Formel

R₁(R₂)N-CH(R₃)- (A)

aufweist, mit (b) einer Verbindung der Formel

R₄(R₅)N-CₙH₂ₙ-(NH-CₙH₂ₙ)_{q}-NH₂ (B),

worin R₁, R₂, R₃, R₄, R₅, n und q die oben angegebenen Bedeutungen haben, umsetzt, so dass die erhaltene Verbindung bzw. die im erhaltenen Gemisch vorliegenden Verbindungen pro Molekül durchschnittlich mindestens einen Substituenten der Formel

(R₄)(R₅)N-CₙH₂ₙ-(NH-CₙH₂ₙ)_{q}-NH-CH(R₃)-

worin die Substituenten R₃, R₄, R₅, n und q die oben angegebenen Bedeutung haben, aufweist bzw. aufweisen.

Die vorliegende Erfindung betrifft im weiteren die Verwendung der erfindungsgemässen Verbindungen als Beschleuniger in härtbaren Systemen, insbesondere in härtbaren Epoxy- und Polyurethan-Systemen.

Die vorliegende Erfindung betrifft im weiteren härtbare Systeme, insbesondere härtbare Epoxy- und Polyurethan-Systeme, welche eine erfindungsgemässe Verbindung oder ein Gemisch solcher Verbindungen enthalten, sowie die daraus hergestellten ausgehärteten Produkte.

Die substituierten phenolischen Verbindungen (Mannichbasen) sind vorzugsweise mit niedermolekularem Di-alkylaminomethyl substituierte Phenole, ortho-, meta- und para-Kresole, die isomeren Xylenole, para-tert.-Butylphenol, para-Nonylphenol, α-Naphthol, β-Naphthol, Diphenole oder Polyphenole, vorzugsweise Resorcin, Hydrochinon, 4,4'-Dioxydiphenyl, 4,4'-Dioxydiphenylether, 4,4'-Dioxydiphenylsulfon, 4,4'-Dioxydiphenylmethan, Bisphenol A, sowie die als Novolake bezeichneten Kondensationsprodukte aus Phenol und Formaldehyd. Bevorzugt sind durch Di-C₁-C₄-alkylaminomethyl substituierte Phenole und Kresole, insbesondere substituiertes Phenol.

R₁ und R₂ bedeuten unabhängig voneinander vorzugsweise Methyl oder Ethyl, vorzugsweise bedeuten R₁ und R₂ Methyl. R₃ bedeutet vorzugsweise Wasserstoff, Methyl oder Ethyl, vorzugsweise Wasserstoff.

Der Substituent (A) bedeutet vorzugsweise Di-C₁-C₄-alkylaminomethyl, insbesondere Dimethylaminomethyl, Ethylmethylaminomethyl und Diethylaminomethyl, insbesondere Dimethylaminomethyl. Ausschlaggebend ist, dass das in der Transaminierungsreaktion freigesetzte niedermolekulare Dialkylamin ohne weiteres auf Grund des niedrigen Siedepunktes aus dem Reaktionsgemische entfernt werden kann.

Die substituierten phenolischen Verbindungen sind sogenannte Mannichbasen. Sie werden in an sich bekannter Weise durch Umsetzung der phenolischen Verbindung mit Formaldehyd, Acetaldehyd, Propionaldehyd oder Benzaldehyd und dem entsprechenden Amin erhalten.

Bevorzugt verwendete Mannichbasen sind substituierte Phenole der Formeln (I), (IIa), (IIb) und (III), wobei Verbindungen der Formeln (lla) und (III) bevorzugt sind. In der Praxis kann auch ein Gemisch dieser Verbindungen verwendet werden. Die Reste R₁ und R₂ haben die in Formel (A) genannte Bedeutung.

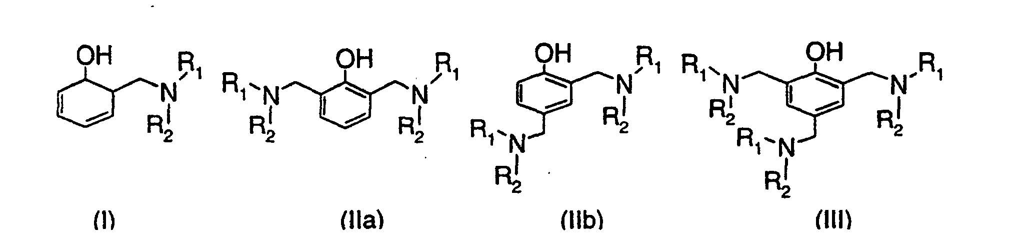

Die weiter oben genannten substituierten phenolischen Verbindungen werden in analoger Weise wie die als Beispiel angegebenen Phenole der Formeln (I), (IIa), (IIb) und (III) hergeleitet.

Erfindungsgemäss werden die oben beschriebenen Mannichbasen mittels einer Transaminierungsreaktion mit Verbindungen der Formel (B)

R₄(R₅)N-CₙH₂ₙ-(NH-CₙH₂ₙ)_{q}-NH₂ (B),

umgesetzt. Vorzugsweise bedeuten darin R₄ und R₅ unabhängig voneinander C₁₋₄Alkyl, vorzugsweise Methyl oder Ethyl. Vorzugsweise bedeuten R₄ und R₅ Methyl. n bedeutet vorzugsweise 2, 3 oder 4, vorzugsweise 3. q bedeutet vorzugsweise Null oder 1, vorzugsweise Null.
Gemäss den bevorzugten Bedeutungen werden auch die entsprechenden Umsetzungsprodukte in der Transaminierungsreaktion erhalten.

Setzt man beispielsweise die Verbindung der Formel (III) mit Dimethylaminopropylamin um, so ergibt sich das folgende Reaktionsschema 1, worin Dimethylaminopropylamin mit H₂NR und die Abgangsgruppe Dimethylamin mit DMA bezeichnet sind. 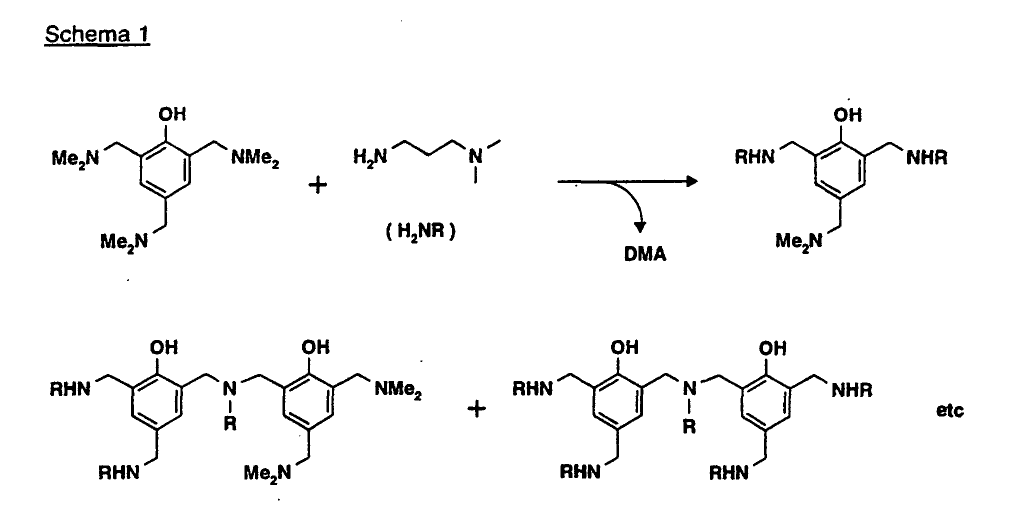 Mittels Transaminierung kann wahlweise nur ein Dimethylaminomethyl-Substituent oder nur zwei der allenfalls vorhandenen drei Substituenten zur Reaktion gebracht werden, wobei die nicht-umgesetzten Dimethylaminomethyl-Substituenten unverändert am phenolischen Kern verbleiben. Im obigen Schema 1 (untere Reihe) ist auch gezeigt, dass bei fortschreitender Reaktion Dimerisierung und weitere Umsetzung zu linearen und verzweigten oligomeren Formen stattfindet. Die generelle Darstellung der dabei entstehenden oligomeren Formen ist in Schema 2 dargestellt. 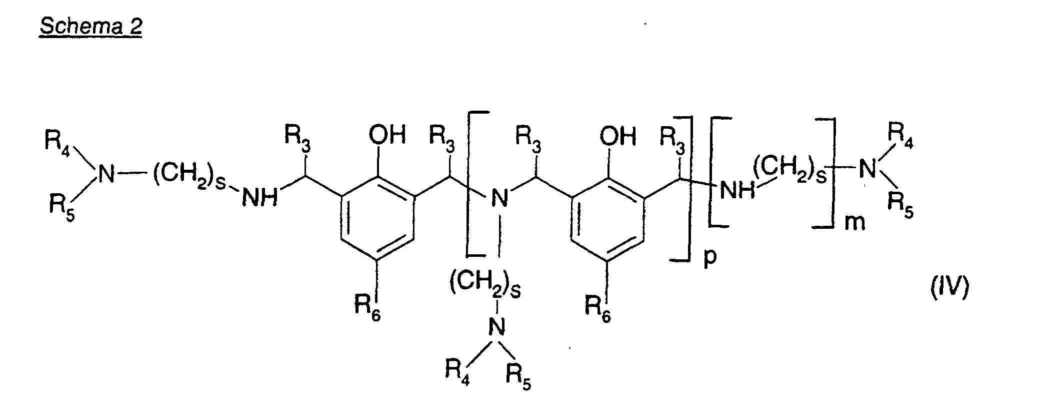 In der obigen Verbindung der Formel (IV) entspricht -(CH₂)_{S}- dem Rest -CₙH₂ₙ-, wie dieser in der Verbindung der Formel B angegeben ist.
R₆ kann Wasserstoff, einen Rest -(CH₂)_{S}-N(R₄)R₅ oder einen oligomeren Rest bedeuten, wie dies aus Schema 1 und Schema 2 ersichtlich ist.

Bei der Umsetzung der Mannichbasen der Formeln (I), (IIa) und (III) mit Dimethylaminopropylamin beispielsweise entstehen u.a. je nach Ausgangsprodukt die folgenden monomeren Verbindungen der Formeln (V), (VI), (VII), (VIII), (IX) und (X): 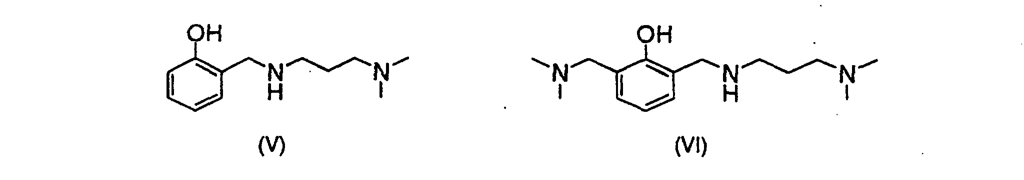 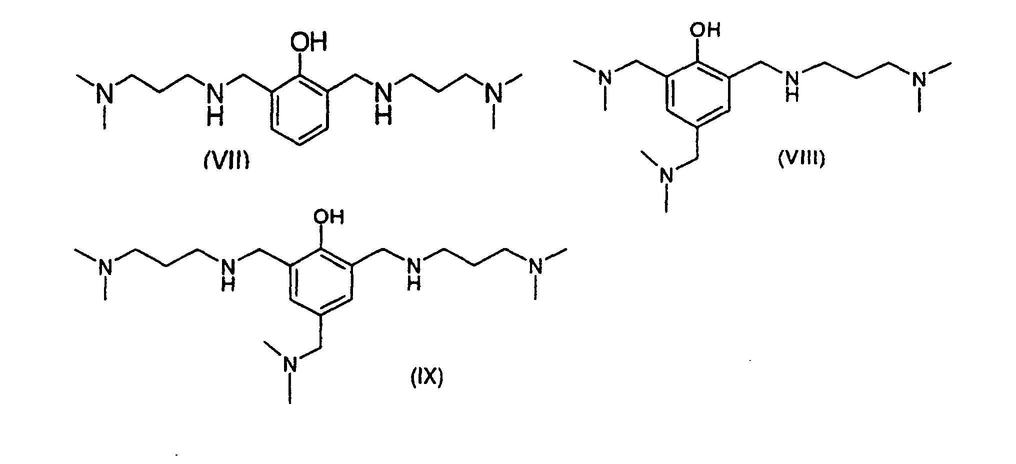 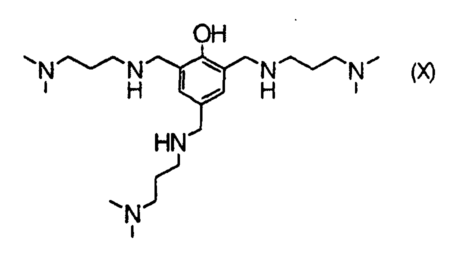 Die Verbindungen der Formeln (V), (VI), (VII), (VIII), (IX) und (X) sind neu und Gegenstand der vorliegenden Erfindung. Ausgehend von Verbindungen der Formel (llb) werden unter den vorliegenden Transaminierungsbedingungen die entsprechenden 2,4-substituierten Produkte gebildet.

Vorzugsweise wird die Transaminierungsreaktion mit einer Verbindung der Formeln (IIa), (IIb) oder (III) oder einem Gemisch dieser Verbindungen mit einer Verbindung der Formel (B), vorzugsweise mit Dimethylaminopropylamin, durchgeführt. Dabei erhält man je nach eingesetztem Ausgangsprodukt ein entsprechendes Gemisch der Verbindungen der Formeln (V) bis (X) sowie entsprechende oligomere Verbindungen, wie dies oben dargelegt ist. Erfindungsgemäss wird soweit transaminiert, bis durchschnittlich pro Molekül der Mannichbase mindesten ein Substituent mit der Verbindung der Formel (B) reagiert hat, so dass sich möglichst wenig oligomere Verbindungen bilden. Vorzugsweise wird die Transaminierungsreaktion soweit durchgeführt, bis mindestens 10% und höchstens 100%, vorzugsweise mindestens 20% und höchstens 80%, vorzugsweise 50% bis 80% der vorhandenen Di-C₁-C₄-alkylaminosubstituenten mit der Verbindung der Formel (B) reagiert haben. Den Umsetzungsgrad misst man beispielsweise durch Messung des von der Mannichbase freigesetzten Amins. In der Regel wird bei einem Umsetzungsgrad im Bereich von 60% bis 75% der Dimethylaminosubstituenten ein optimales Gleichgewicht zwischen monomeren und oligomeren Verbindungen erreicht. Dies zeigt sich auch bei Messung der Viskosität der erreichten Zusammensetzung. Deren Viskosität liegt vorzugsweise im Bereich von 0.1 Pa•s bis 100 Pa•s (25°C), vorzugsweise im Bereich von 1 Pa•s bis 30 Pa•s (25°C). Vorzugsweise liegt die Viskosität bei <10 Pa•s (25°C).

Verwendet man als Ausgangsprodukt die Mannichbase der Formel (I) so wird die Transaminierungsreaktion soweit durchgeführt, bis praktisch alle vorhandenen Dialkylamino-Substituenten bzw. Dimethylaminosubstituenten mit der Verbindung der Formel (B) reagiert haben.
Die Reaktanden werden im Reaktor vorzugsweise in Abwesenheit von Lösemitteln vereinigt und auf 50 bis 150 °C, vorzugsweise 100 bis 130 °C erwärmt. Die Reaktion wird überwacht durch die Bestimmung der abgespaltenen Dialkylaminverbindung. Die Reaktion wird bei Erniedrigung der Temperatur auf etwa Raumtemperatur beim gewünschten (Teil)umsatz gestoppt. Das so erhaltene Produktgemisch erweist sich als lagerstabil. Allenfalls kann nicht umgesetztes Eduktamin (Formel B) destillativ entfernt werden.

Erfindungsgemäss werden die erfindungsgemäss als Beschleuniger wirkenden Verbindungen in härtbaren Systemen, insbesondere in härtbaren Epoxy- und Polyurethan-Systemen eingesetzt. Prinzipiell können die erfindungsgemässen Verbindungen in den härtbaren Systemen als Härter (anstelle des üblicherweise verwendeten Härters) eingesetzt werden. Es ist jedoch von Vorteil, in den an sich bekannten Systemen ein Gemisch des üblicherweise eingesetzten Härters und des erfindungsgemässen Beschleunigers einzusetzen, wobei vorzugsweise von 0.5% bis 20%, vorzugsweise von 1% bis 10% und insbesondere etwa 5% des erfindungsgemässen Beschleunigers (bezogen auf das Gesamtgewicht des üblicherweise eingesetzten Härters und des erfindungsgemässen Beschleunigers) eingesetzt werden.
Als Epoxidharze, die in den härtbaren Gemischen eingesetzt werden können, eignen sich die in der Epoxidharztechnik üblichen Epoxidharze. Beispiele für Epoxidharze sind:
I) Polyglycidyl- und Poly-(β-methylglycidyl)ester, erhältlich durch Umsetzung einer Verbindung mit mindestens zwei Carboxylgruppen im Molekül und Epichlorhydrin bzw. β-Methylepichlorhydrin. Als Verbindung mit mindestens zwei Carboxylgruppen im Molekül können aliphatische Polycarbonsäuren verwendet werden. Beispiele für solche Polycarbonsäuren sind Oxalsäure, Bemsteinsäure, Glutarsäure, Adipinsäure, Pimelinsäure, Sebacinsäure, Korksäure, Azelainsäure oder dimerisierte bzw. trimerisierte Linolsäure. Im weiteren können cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure. Weiterhin können aromatische Polycarbonsäuren Verwendung finden, wie beispielsweise Phthalsäure, Isophthalsäure oder Terephthalsäure. Bevorzugt sind Umsetzungsprodukte von Säuren mit zwei Carboxylgruppen im Molekül mit Epichlorhydrin und/oder β-Methylepichlorhydrin.
II) Polyglycidyl- oder Poly-(β-methylglycidyl)ether, erhältlich durch Umsetzung einer Verbindung mit mindestens zwei freien alkoholischen Hydroxygruppen und/oder phenolischen Hydroxygruppen unter alkalischen Bedingungen, oder in Anwesenheit eines sauren Katalysators und anschliessende Alkalibehandlung. Die Glycidylether dieses Typs leiten sich beispielsweise von acyclischen Alkoholen ab, wie von Ethylenglykol, Diethylenglykol und höheren Poly-(oxyethylen)glykolen, Propan-1,2-diol oder Poly-(oxypropylen)glykolen, Propan-1,3-diol, Butan-1,4-diol, Poly-(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen. Sie leiten sich aber auch beispielsweise von cycloaliphatischen Alkoholen, wie 1,4-Cyclohexandimethanol, Bis-(4-hydroxycyclohexyl)methan oder 2,2-Bis-(4-hydroxycyclohexyl)propan ab, oder sie besitzen aromatische Kerne, wie N,N-Bis-(2-hydroxyethyl)anilin oder p,p'-Bis-(2-hydroxyethylamino)diphenylmethan. Die Glycidylether können sich auch von einkernigen Phenolen ableiten, wie beispielsweise von Resorcin oder Hydrochinon, oder sie basieren auf mehrkemigen Phenolen, wie beispielsweise Bis-(4-hydroxyphenyl)methan, 4,4'-Dihydroxybiphenyl, Bis-(4-hydroxyphenyl)sulfon, 1,1,2,2-Tetrakis(4-hydroxyphenyl)ethan, 2,2-Bis-(4-hydroxyphenyl)propan, 2,2-Bis-(3,5-dibrom-4-hydroxyphenyl)propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, wie solche der oben genannten Art. Bevorzugt sind Umsetzungsprodukte von Verbindungen mit zwei freien alkoholischen Hydroxygruppen und/oder phenolischen Hydroxygruppen mit Epichlorhydrin und/oder β-Methylepichlorhydrin.
III) Poly-(N-glycidyl)verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)methan, m-Xylylendiamin oder Bis-(4-methylaminophenyl)methan. Zu den Poly-(N-glycidyl)verbindungen zählen aber auch Triglycidylisocyanurat, N,N'-Diglycidylderivate von Cycloalkylenhamstoffe, wie Ethylenhamstoff oder 1,3-Propylenharnstoff, und Diglycidylderivate von Hydantoinen, wie von 5,5-Dimethylhydantoin. Bevorzugt sind Umsetzungsprodukte von Aminen, die zwei reaktive Aminwasserstoffatome enthalten mit Epichlorhydrin und/oder β-Methylepichlorhydrin.
IV) Poly-(S-glycidyl)verbindungen, beispielsweise Di-S-glycidylderivate, die sich von Dithiolen, wie beispielsweise Ethan-1,2-dithiol oder Bis-(4-mercaptomethylphenyl)ether ableiten.
V) Cycloaliphatische Epoxidharze, beispielsweise Bis-2,3-epoxycyclopentyl)ether, 2,3-Epoxycyclopentylglycidylether, 1,2-Bis-(2,3-epoxycyclopentyloxy)ethan, oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)propan, wobei jeweils die Verbindungen mit zwei Epoxidgruppen bevorzugt sind.

Bevorzugt verwendet man in den erfindungsgemässen härtbaren Gemischen als Epoxidharz einen flüssigen oder viskosen Polyglycidylether oder -ester.

Bevorzugt sind die genannten aromatischen und/oder aliphatischen Polyglycidylether, welche für die Tieftemperaturhärtung (<5°C) geeignet sind.

Die als Ausgangsmaterial verwendeten Epoxidverbindungen sind an sich bekannt und zum Teil im Handel erhältlich. Es können auch Gemische von Epoxidharzen verwendet werden. Alle üblichen Härter für Epoxide können eingesetzt werden, wie zum Beispiel Amine, Carbonsäuren, Carbonsäureanhydride oder Phenole. Weiterhin können auch katalytische Härter eingesetzt werden, wie beispielsweise Imidazole. Solche Härter sind zum Beispiel in H.Lee, K. Neville, Handbook of Epoxy Resins, McGraw Hill Book Company, 1967, Seite 10-17 beschrieben. Bevorzugte Härter sind an sich bekannte Polyaminoverbindungen, insbesondere bevorzugt sind aliphatische Polyaminoverbindungen, wie beispielsweise Isophorondiamin oder Diethylentriamin und die an sich bekannten höhermolekularen Polyamine.

Die Menge des eingesetzten Härtungsmittels richtet sich nach der chemischen Natur des Härtungsmittels und nach den gewünschten Eigenschaften der härtbaren Mischung und des gehärteten Produkts. Die maximale Menge kann vom Fachmann insbesondere auf Grund stöchiometrischer Berechnungen leicht ermittelt werden.

Geeignete Polyurethan-Systeme für die Verwendung der erfindungsgemässen Verbindungen sind beispielsweise im Kunststoff Handbuch Nr. 7, "Polyurethane" (Verlag Carl Hanser 1983) beschrieben (Kapitel 2.2, Seiten 12-19). Die dort angegebenen Katalysatoren (Kapitel 3.41., Seite 92ff) können durch die erfindungsgemässen Beschleuniger teilweise oder gänzlich ersetzt werden.

Die Herstellung der Gemische aus Epoxid- oder Polyurethankomponente, Härter sowie erfindungsgemässer Beschleuniger kann in üblicher Weise durch Vermischen der Komponenten durch Handrührung oder mit Hilfe bekannter Mischaggregate, beispielsweise mittels Rührer, Kneter oder Walzen, erfolgen. Je nach Anwendung können den Gemischen die gebräuchlichen Zusätze beigegeben werden, wie beispielsweise Füllstoffe, Pigmente, Farbstoffe, Verlaufmittel oder Plastifizierungsmittel. Im Handel können die erfindungsgemässen Harze in an sich bekannter Weise als Zweikomponentensysteme angeboten werden.

### Beispiel 1

2407 g (26 Equivalente) einer Mischung der Mannichbasen Di-(2,6-dimethylaminomethyl)-phenol und Tris-(2,4,6-dimethylaminomethyl)-phenol im Gewichtsverhältnis von 3:7, sowie 2652 g (26 Mol) Dimethylaminopropylamin werden in einem heizbaren Glaskolben, ausgerüstet mit Rückflusskühler und Rührer, vorgelegt und unter Rühren auf 120°C erhitzt. Das infolge der Transaminierungsreaktion freigesetzte Dimethylamin (Sdp. 9°C) wird laufend durch den Rückflusskühler entfernt, bei -78°C kondensiert und gemessen. Nach etwa 4 Stunden sind 70 Mol% des stöchiometrisch verfügbaren Dimethylamins freigesetzt. Dabei werden 1253 g (12.28 Mol) an Dimethylaminopropylamin eingebaut. Bei diesem Stand wird die Reaktion durch Abkühlen des Reaktionsgemisches unterbrochen. Das erhaltene Reaktionsgemisch wird nun in eine Destillationsapparatur gegeben (Heizmanteltemperatur: 90°C). Der Kühler wird auf -22°C gekühlt. Die evakuierte Apparatur hat einen Druck von 15-25 mbar. Das Destillat, Dimethylaminopropylamin, ist farblos, transparent und gemäss HPLC- und NMR-Messungen zu 100% rein. Der gestrippte Rückstand hat eine Viskosität von 2000 mPa•s bei 25°C und enthält 0.3% Dimethylaminopropylamin.

### Beispiel 2

Der in Beispiel 1 hergestellte Beschleuniger wird gemäss Tabelle 1 verwendet. Gleichfalls in Tabelle 1 angegeben sind die Resultate, welche mit einem Beschleuniger gemäss dem Stand der Technik erhalten wurde.

**Tabelle 1**

| | Stand der Technik Gewichtsteile | Erfindunggemäss Gewichtsteile |
|---|---|---|
| Bis-A-diglycidylether-Basis¹) | 100 | 100 |
| IPD/TMD-Basis²⁾ | 45 | 45 |
| Tris-(2,4,6-dimethylaminomethyl)-phenol | 1.5 | |
| Verbindung gemäss Beispiel 1 | | 1.5 |
| Eigenschaften nach Härtung bei 5°C: Persozhärte nach 1,2,3,7,14 und 28 Tagen | | |
| 1 | 30 (9)³⁾ | 48 (14) |
| 2 | 80 (25) | 125 (39) |
| 3 | 125 (39) | 160 (50) |
| 7 | 162 (51) | 215 (67) |
| 14 | 201 (63) | 275 (86) |
| 28 | 208 (65) | 283 (90) |

| | | |
|---|---|---|
| Note: ¹⁾ Basis = Hauptkomponente Epoxidharz und ggf. optional zusätzliche Additive | | |
| ²⁾ Basis = Formulierter Härter, IPD = Isophorondiamin (Hüls-Chemie AG), TMD = Trimethyl-hexamethylendiamin (Hüls-Chemie AG), | | |
| ³⁾ Werte in () bedeuten Wert in % der erreichbaren Endhärte | | |

### Beispiel 3

In diesem Beispiel wird der Einbau hoher Mengen an Beschleuniger in die polymere Matrix bei gleichzeitiger Reduktion des aminischen Härters gezeigt. Die entsprechenden Daten sind aus Tabelle 2 ersichtlich.

**Tabelle 2**

| | Ohne Beschleuniger Gewichtsteile | Mit Beschleuniger Gewichtsteile |
|---|---|---|
| Bis-A-diglycidylether-Basis¹⁾ | 100 | 100 |
| Tetraethylen-triamin-Basis²⁾ | 70 | 35 |
| Verbindung gemäss Beispiel 1 | | 20 |
| Viskosität in mPa•s | 4640 | 6400 |
| Gelierzeit in Minuten | 214 | 12 |
| Staubtrockenzeit in Stunden | 10 | 1 |
| Durchhärtungszeit in Stunden | ca. 20 | ca. 4 |
| Eigenschaften nach Härtung bei 5°C: Persozhärte nach 1,2,3,7,14 und 28 Tagen | | |
| 1 | weich³⁾ | 131 |
| 2 | 1 | 170 |
| 3 | 10 | 210 |
| 7 | 19 | 248 |
| 14 | 29 | 258 |
| 28 | 36 | 260 |

| | | |
|---|---|---|
| Note: ¹⁾ Basis = Hauptkomponente Epoxidharz und ggf. optional zusätzliche Additives | | |
| ²⁾ Basis = Formulierung | | |
| ³⁾ weich = mangels Aushärtung kein messbarer Härtegrad | | |

### Beispiel 4

In diesem Beispiel wird die Aktivität in Polyurethansystemen auf der Basis von MDI (technische Qualität an 4,4'-Diisocyanatodiphenylmethan von z.B. BASF, BAYER, DOW) und Polyetherpolyolen gezeigt.

| Konzentration der Verbindung aus Beispiel 1 | 0% | 2% | 5% |
|---|---|---|---|
| Potlife in Minuten | 60-90 | 5 | 1-2 |
| Entformzeit in Stunden | 16-18 | 0.5 | 0.2 |
| Durchhärtung in Stunden | 24-48 | 1-2 | 0.5 |

## Patentansprüche

1. Als Beschleuniger wirkende Verbindungen für härtbare Epoxy- und Polyurethan-Systeme, **dadurch gekennzeichnet, dass** diese Verbindungen mittels einer Transaminierungsreaktion durch Umsetzung von
(a) einer substituierten phenolischen Verbindung (Mannichbase), welche mindestens einen Substituenten der Formel
R₁(R₂)N-CH(R₃)- (A)
aufweist, worin
R₁ und R₂ unabhängig voneinander lineares oder verzweigtes C₁-C₄-Alkyl und R₃ Wasserstoff, Methyl, Ethyl oder Phenyl bedeuten, mit
(b) einer Verbindung der Formel
R₄(R₅)N-CₙH₂ₙ-(NH-CₙH₂ₙ)_{q}-NH₂ (B),
worin R₄ und R₅ unabhängig voneinander C₁-C₆-Alkyl bedeuten oder gemeinsam einen Rest der Formel -(CH₂)₅- oder -(CH₂)₂-O-(CH₂)₂- bilden, n eine ganze Zahl von 2 bis 5 und q Null, 1, 2 oder 3 bedeuten,
hergestellt wurden, und die erhaltene Verbindung bzw. die im erhaltenen Gemisch vorliegenden Verbindungen pro Molekül durchschnittlich mindestens einen Substituenten der Formel
(R₄)(R₅)N-CₙH₂ₙ-(NH-CₙH₂ₙ)_{q}-NH-CH(R₃)-
aufweisen, worin die Substituenten R₃, R₄, R₅, n und q die oben angegebenen Bedeutung haben.

2. Verbindungen nach Anspruch 1, **dadurch gekennzeichnet, dass** in der Transaminierungsreaktion als Mannichbase ein mit niedermolekularem Dialkytaminomethyl substituiertes Phenol, ortho-, meta- oder para-Kresol, ein isomeres Xylenol, para-tert.-Butylphenol, para-Nonylphenol, α-Naphthol, β-Naphthol, Diphenol und ein Polyphenol, vorzugsweise Resorcin, Hydrochinon, 4,4'-Dioxydiphenyl, 4,4'-Dioxydiphenylether, 4,4'-Dioxydiphenylsulfon, 4,4'-Dioxydiphenylmethan, Bisphenol A, oder die als Novolake bezeichneten Kondensationsprodukte aus Phenol und Formaldehyd eingesetzt wurden.

3. Verbindungen nach Anspruch 1 oder 2, **dadurch gekennzeichnet, dass** in der Transaminierungsreaktion als Mannichbase ein substituiertes Phenol oder ein Kresol, vorzugsweise ein substituiertes Phenol verwendet wird.

4. Verbindungen nach einem der Ansprüche 1 bis 3, **dadurch gekennzeichnet, dass** R₁ und R₂ unabhängig voneinander Methyl oder Ethyl, vorzugsweise Methyl und R₃ Wasserstoff, Methyl oder Ethyl, vorzugsweise Wasserstoff bedeuten.

5. Verbindungen nach einem der Ansprüche 1 bis 4, **dadurch gekennzeichnet, dass** der Substituent (A) Di-C₁-C₄-alkylaminomethyl, vorzugsweise Dimethylaminomethyl, Ethylmethylaminomethyl und/oder Diethylaminomethyl, vorzugsweise Dimethylaminomethyl bedeutet.

6. Verbindungen nach einem der Ansprüche 1 bis 5, **dadurch gekennzeichnet, dass** als Mannichbase ein substituiertes Phenole der Formeln (I), (IIa), (IIb) und (III), vorzugsweise eine Verbindung der Formeln (IIa) und (III) oder ein Gemisch dieser Verbindungen verwendet werden, 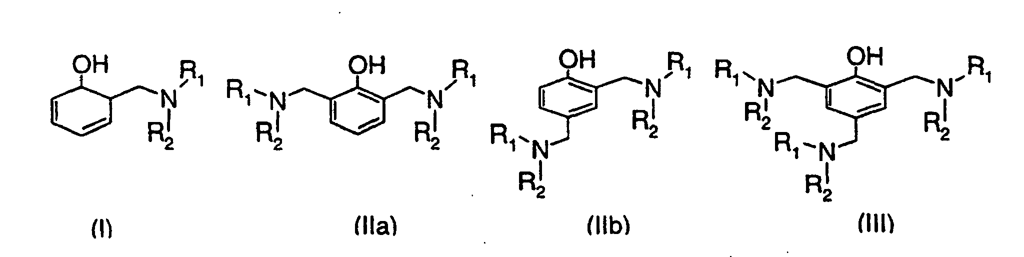 wobei die Reste R₁ und R₂ die in Anspruch 1 angegebene Bedeutung haben.

7. Verbindungen nach einem der Ansprüche 1 bis 6, **dadurch gekennzeichnet, dass** R₄ und R₅ unabhängig voneinander C₁-C₄-Alkyl, vorzugsweise Methyl oder Ethyl, vorzugsweise Methyl; n 2, 3 oder 4, vorzugsweise 3 und q Null oder 1, vorzugsweise Null bedeuten.

8. Verbindungen nach einem der Ansprüche 1 bis 7, **dadurch gekennzeichnet, dass** diese eine Verbindung der Formeln (V), (VI), (VII), (VIII), (IX) und (X) oder einer Gemisch dieser Verbindungen, welche oligomere Derivate dieser Verbindungen enthält, darstellen, 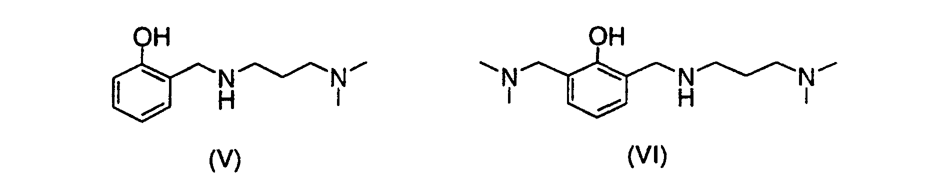 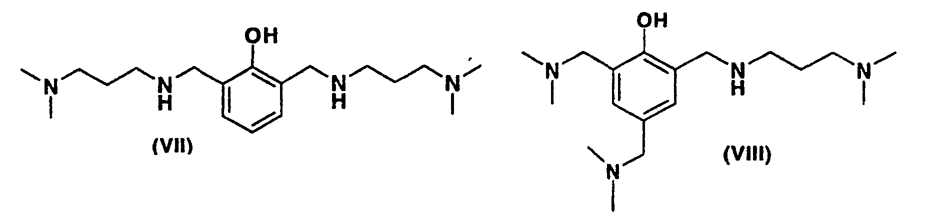 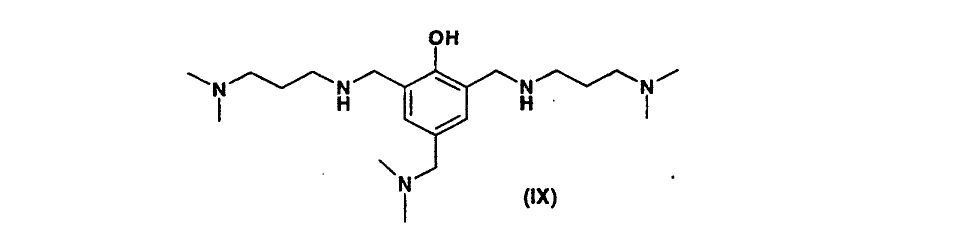 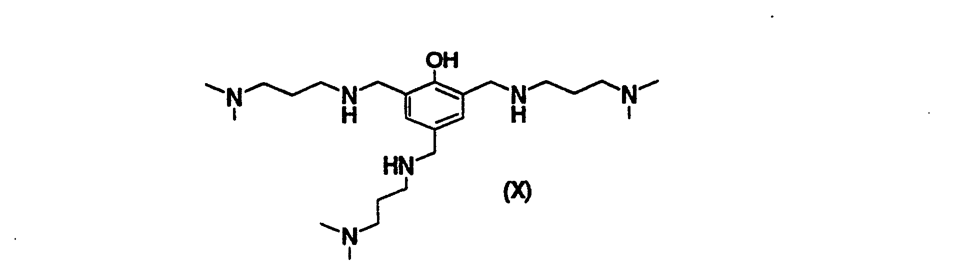 wobei die endständigen Stickstoffgruppen Reste R₁ und R₂ tragen, die die in Anspruch 1 angegebene Bedeutung haben.

9. Verbindungen nach einem der Ansprüche 1 bis 8, **dadurch gekennzeichnet, dass** die Transaminierungsreaktion soweit durchgeführt wird, dass durchschnittlich pro Molekül der Mannichbase mindestens ein Substituent mit der Verbindung der Formel (B) reagiert, so dass mindestens 10% und höchstens 100%, vorzugsweise mindestens 20% und höchstens 80%, vorzugsweise 50% bis 80%, vorzugsweise 60% bis 75% der vorhandenen Di-C₁-C₄-alkylaminomethylsubstituenten mit der Verbindung der Formel (B) reagieren.

10. Verbindungen nach einem der Ansprüche 1 bis 9, **dadurch gekennzeichnet, dass** soweit transaminiert wird, dass die Viskosität der Reaktionsmischung im Bereich von 0.1 Pa•s bis 100 Pa•s (25°C), vorzugsweise im Bereich von 1 Pa•s bis 30 Pa•s (25°C), vorzugsweise bei <10 Pa•s (25°C) liegt.

11. Verfahren zur Herstellung der Verbindungen nach einem der Ansprüche 1 bis 10, **dadurch gekennzeichnet, dass** man mittels einer Transaminierungsreaktion (a) eine substituierte phenolische Verbindung (Mannichbase), welche mindestens eine Substituenten der Formel
R₁(R₂)N-CH(R₃)- (A)
aufweist, mit (b) einer Verbindung der Formel
R₄(R₅)N-CₙH₂ₙ-(NH-CₙH₂ₙ)_{q}-NH₂ (B),
worin R₁, R₂, R₃, R₄ und R₅, n und q die in den Ansprüchen 1 bis 8 angegebenen Bedeutungen haben, umsetzt, so dass die erhaltene Verbindung bzw. die im erhaltenen Gemisch vorliegenden Verbindungen pro Molekül durchschnittlich mindestens einen Substituenten der Formel
(R₄)(R₅)N-CₙH₂ₙ-(NH-CₙH₂ₙ)_{q}-NH-CH(R₃)-
worin die Substituenten R₃, R₄, R₅, n und q die in den Ansprüchen 1 bis 8 angegebenen Bedeutung haben, aufweist bzw. aufweisen.

12. Verfahren nach Anspruch 11, **dadurch gekennzeichnet, dass** die Transaminierungsreaktion mit einer Verbindung der Formeln (IIa), (IIb) oder (III) oder einem Gemisch dieser Verbindungen mit einer Verbindung der Formel (B), vorzugsweise mit Dimethylaminopropylamin, durchgeführt wird.

13. Verfahren nach Anspruch 11 oder 12, **dadurch gekennzeichnet, dass** man soweit transaminiert, bis durchschnittlich pro Molekül der Mannichbase mindestens ein Substituent mit der Verbindung der Formel (B) reagiert hat, so dass mindestens 10% und höchstens 100%, vorzugsweise mindestens 20% und höchstens 80%, vorzugsweise 50% bis 80%, vorzugsweise 60% bis 75% der vorhandenen Di-C₁-C₄-alkylaminomethylsubstituenten mit der Verbindung der Formel (B) reagieren.

14. Verfahren nach einem der Ansprüche 11 bis 13, **dadurch gekennzeichnet, dass** man soweit transaminiert, bis die Viskosität der Reaktionsmischung im Bereich von 0.1 Pa•s bis 100 Pa•s (25°C), vorzugsweise im Bereich von 1 Pa•s bis 30 Pa•s (25°C), vorzugsweise bei <10 Pa•s (25°C) liegt.

15. Die gemäss einem der Ansprüche 11 bis 13 hergestellten Verbindungen bzw. Verbindungsgemische.

16. Verwendung der Verbindungen gemäss einem der Ansprüche 1 bis 15 als Beschleuniger in härtbaren Systemen, vorzugsweise in härtbaren Epoxy- und Polyurethan-Systemen.

17. Härtbare Systeme, vorzugsweise härtbare Epoxy- und Polyurethan-Systeme, welche eine Verbindung gemäss einem der Ansprüche 1 bis 15 oder ein Gemisch solcher Verbindungen enthalten.

18. Ausgehärtete Produkte, welche aus einem härtbaren System gemäss Anspruch 17 erhalten wurden.

## Claims

1. Compounds active as accelerators for curable epoxy and polyurethane systems, **characterised in that** the compounds have been prepared by means of a transamination reaction by reacting
(a) a substituted phenolic compound (Mannich base) having at least one substituent of formula
R₁(R₂)N-CH(R₃)- (A),
wherein
R₁ and R₂ are each independently of the other linear or branched C₁-C₄alkyl and R₃ is hydrogen, methyl, ethyl or phenyl, with
(b) a compound of formula
R₄(R₅)N-CₙH₂ₙ-(NH-CₙH₂ₙ)_{q}-NH₂ (B),
wherein R₄ and R₅ are each independently of the other C₁-C₆alkyl or together form a radical of formula -(CH₂)₅- or -(CH₂)₂-O-(CH₂)₂-, n is an integer from 2 to 5 and q is zero, 1, 2 or 3,
and the compound obtained or the compounds present in the mixture obtained has/have on average, per molecule, at least one substituent of formula
(R₄)(R₅)N-CₙH₂ₙ-(NH-CₙH₂ₙ)_{q}-NH-CH(R₃)-,
wherein the substituents R₃, R₄, R₅, n and q have the meanings given above.

2. Compounds according to claim 1, **characterised in that** a low-molecular-weight-dialkylaminomethyl-substituted phenol, *ortho-, meta-* or *para*-cresol, an isomer of xylenol, para-*tert*-butylphenol, para-nonylphenol, α-naphthol, β-naphthol, diphenol and a polyphenol, preferably resorcinol, hydroquinone, 4,4'-dihydroxydiphenyl, 4,4'-dihydroxydiphenyl ether, 4,4'-dihydroxydiphenylsulfone, 4,4'-dihydroxydiphenylmethane, bisphenol A, or the condensation products of phenol and formaldehyde termed novolaks have been used as the Mannich base in the transamination reaction.

3. Compounds according to either claim 1 or claim 2, **characterised in that** a substituted phenol or a cresol, preferably a substituted phenol, is used as the Mannich base in the transamination reaction.

4. Compounds according to any one of claims 1 to 3, **characterised in that** R₁ and R₂ are each independently of the other methyl or ethyl, preferably methyl, and R₃ is hydrogen, methyl or ethyl, preferably hydrogen.

5. Compounds according to any one of claims 1 to 4, **characterised in that** the substituent (A) is di-C₁-C₄alkylaminomethyl, preferably dimethylaminomethyl, ethylmethylaminomethyl and/or diethylaminomethyl, preferably dimethylaminomethyl.

6. Compounds according to any one of claims 1 to 5, **characterised in that** there is used a substituted phenol of formulae (I), (IIa), (IIb) and (III), preferably a compound of formulae (IIa) and (III) or a mixture of those compounds 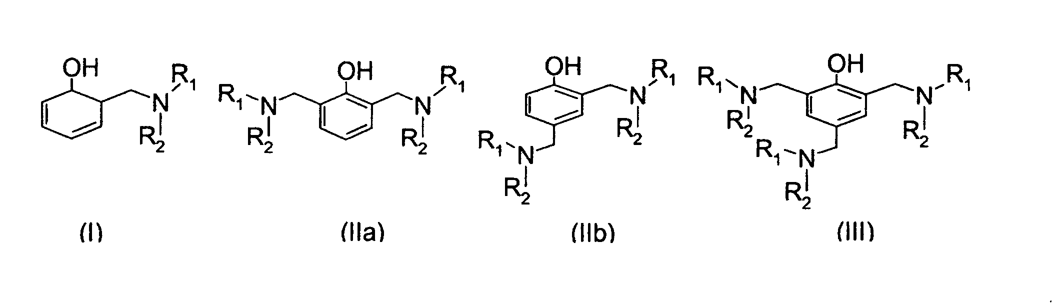 wherein the radicals R₁ and R₂ are as defined in claim 1.

7. Compounds according to any one of claims 1 to 6, **characterised in that** R₄ and R₅ are each independently of the other C₁-C₄alkyl, preferably methyl or ethyl, preferably methyl; n is 2, 3 or 4, preferably 3 and q is zero or 1, preferably zero.

8. Compounds according to any one of claims 1 to 7, **characterised in that** they constitute a compound of formulae (V), (VI), (VII), (VIII), (IX) and (X) or a mixture of those compounds that comprises oligomeric derivatives of those compounds 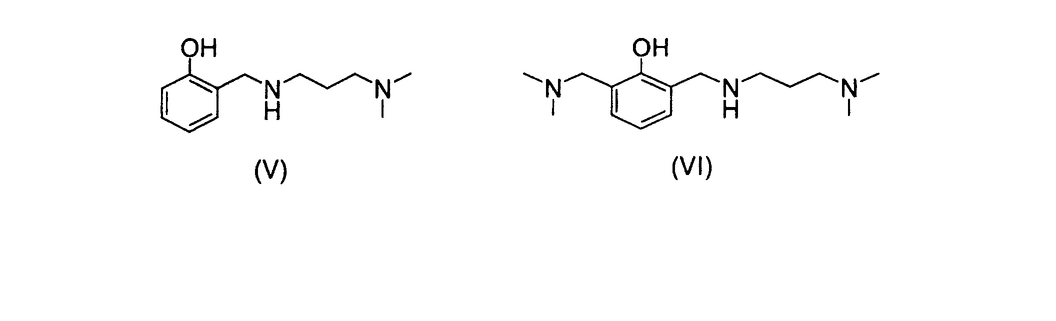 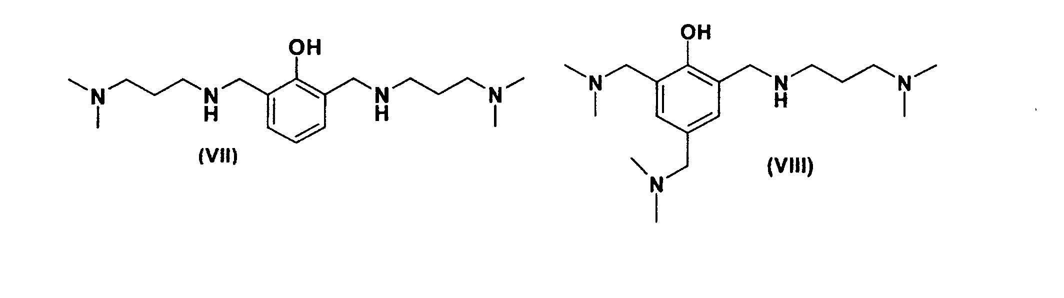 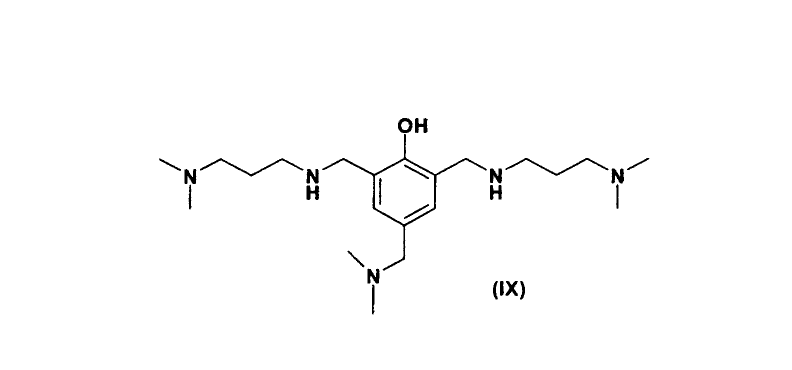 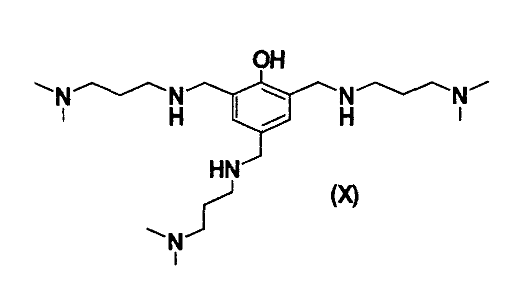 wherein the terminal nitrogen groups carry the radicals R₁ and R₂, which are as defined in claim 1.

9. Compounds according to any one of claims 1 to 8, **characterised in that** the transamination reaction is carried out until on average, per molecule of the Mannich base, at least one substituent reacts with the compound of formula (B), so that at least 10% and a maximum of 100 %, preferably at least 20 % and a maximum of 80 %, preferably from 50 % to 80 %, preferably from 60 % to 75 %, of the di-C₁-C₄alkylaminomethyl substituents present react with the compound of formula (B).

10. Compounds according to any one of claims 1 to 9, **characterised in that** transamination is carried out until the viscosity of the reaction mixture is in the range from 0.1 Pa•s to 100 Pa•s (25°C), preferably in the range from 1 Pa•s to 30 Pa•s (25°C), preferably <10 Pa•s (25°C).

11. A process for the preparation of compounds according to any one of claims 1 to 10, **characterised in that**, by means of a transamination reaction, (a) a substituted phenolic compound (Mannich base) having at least one substituent of formula
R₁(R₂)N-CH(R₃)- (A)
is so reacted with (b) a compound of formula
R₄(R₅)N-CₙH₂ₙ-(NH-CₙH₂ₙ)_{q}-NH₂ (B),
wherein R₁, R₂, R₃, R₄ and R₅, n and q are as defined in claims 1 to 8, that the compound obtained or the compounds present in the mixture obtained has/have on average, per molecule, at least one substituent of formula
(R₄)(R₅)N-CₙH₂ₙ-(NH-CₙH₂ₙ)_{q}-NH-CH(R₃)-,
wherein the substituents R₃, R₄, R₅, n and q are as defined in claims 1 to 8.

12. A process according to claim 11, **characterised in that** the transamination reaction is carried out using a compound of formula (IIa), (IIb) or (III) or a mixture of those compounds together with a compound of formula (B), preferably with dimethylaminopropylamine.

13. A process according to either claim 11 or claim 12, **characterised in that** transamination is carried out until on average, per molecule of the Mannich base, at least one substituent has reacted with the compound of formula (B), so that at least 10 % and a maximum of 100 %, preferably at least 20 % and a maximum of 80 %, preferably from 50 % to 80 %, preferably from 60 % to 75 %, of the di-C₁-C₄alkylaminomethyl substituents present react with the compound of formula (B).

14. A process according to any one of claims 11 to 13, **characterised in that** transamination is carried out until the viscosity of the reaction mixture is in the range from 0.1 Pa•s to 100 Pa•s (25°C), preferably in the range from 1 Pa•s to 30 Pa•s (25°C), preferably <10 Pa•s (25°C).

15. The compounds or mixtures of compounds prepared according to any one of claims 11 to 13.

16. The use of the compounds according to any one of claims 1 to 15 as accelerators in curable systems, preferably in curable epoxy and polyurethane systems.

17. Curable systems, preferably curable epoxy and polyurethane systems, which comprise a compound according to any one of claims 1 to 15 or a mixture of such compounds.

18. Cured products which have been obtained from a curable system according to claim 17.

## Revendications

1. Composés agissant comme accélérateur pour des systèmes durcissables époxy et polyuréthannes, **caractérisés en ce qu'**on obtient ces composés au moyen d'une réaction de transamination par transformation
(a) d'un composé phénolique substitué (base de Mannich), qui présente au moins un substituant de formule
R₁(R₂)N-CH(R₃)- (A)
où R₁ et R₂ représentent, indépendamment l'un de l'autre, un groupe alkyle en C₁-C₄ linéaire ou ramifié et R₃ représente un atome d'hydrogène, des groupes méthyle, éthyle ou phényle, avec
(b) un composé de formule
R₄(R₅)N-CₙH₂ₙ-(NH-CₙH₂ₙ)_{q}-NH₂ (B)
où R₄ et R₅ représentent, indépendamment l'un de l'autre, un groupe alkyle en C₁-C₆ ou conjointement forment un reste de formule -(CH₂)₅- ou -(CH₂)₂-O-(CH₂)₂-, n est un entier de 2 à 5 et q vaut 0, 1, 2 ou 3,
et le composé obtenu ou les composés présents dans le mélange obtenu présentent par molécule en moyenne un substituant de formule
R₄(R₅)N-CₙH₂ₙ-(NH-CₙH₂ₙ)_{q}-NH-CH(R₃)-
où les substituants R₃, R₄, R₅, n et q possèdent la signification donnée ci-dessus.

2. Composé selon la revendication 1, **caractérisé en ce qu'**on utilise dans la réaction de transamination comme base de Mannich un phénol substitué par un substituant dialkylaminométhyle de bas poids moléculaire, les ortho-, méta- et para-crésols, un xylénol isomère, le para-tert.-butylphénol, le para-nonylphénol, l'α-naphtol, le β-naphtol, un diphénol ou polyphénol, de préférence la résorcine, l'hydroquinone, le 4,4'-dioxydiphényle, l'éther 4,4'-dioxydiphénylique, la 4,4'-dioxydiphényl-sulfone, le 4,4'-dioxydiphénylméthane, le bisphénol A, ainsi que les produits de condensation du phénol et du formaldéhyde nommés novolaques.

3. Composés selon la revendication 1 ou 2, **caractérisés en ce qu'**on utilise en tant que base de Mannich dans la réaction de transamination un crésol ou un phénol substitué, de préférence un phénol substitué.

4. Composés selon l'une des revendications 1 à 3, **caractérisés en ce que** R₁ et R₂ représentent indépendamment l'un de l'autre un groupe méthyle ou éthyle, de préférence méthyle et R₃ représente un atome d'hydrogène, un groupe méthyle ou éthyle, de préférence un atome d'hydrogène.

5. Composés selon l'une des revendications 1 à 4, **caractérisés en ce que** le substituant (A) représente un groupe di(alkyl en C₁-C₄)aminométhyle, en particulier diméthylaminométhyle, éthylméthylamino-méthyle et/ou diéthylaminométhyle, en particulier diméthylamino-méthyle.

6. Composés selon l'une des revendications 1 à 5, **caractérisés en ce qu'**on utilise en tant que bases de Mannich un phénol substitué de formule (I), (IIa), (IIb) et (III), de préférence un composé de formules (IIa) et (III) ou un mélange de ces composés, 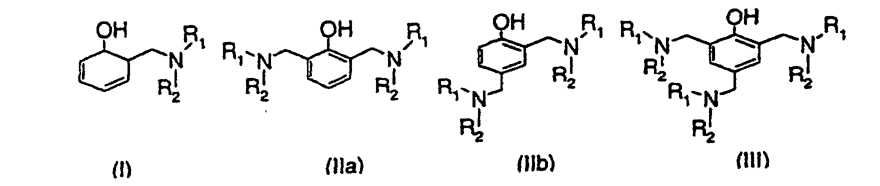 les restes R₁ et R₂ possèdent la signification donnée à la revendication 1.

7. Composés selon l'une des revendications 1 à 6, **caractérisés en ce que** R₄ et R₅ représentent, indépendamment l'un de l'autre, un groupe alkyle en C₁-C₄, de préférence méthyle ou éthyle, de préférence méthyle ; n vaut 2, 3 ou 4, de préférence 3 et q vaut zéro ou 1, de préférence zéro.

8. Composés selon l'une des revendications 1 à 7, **caractérisés en ce qu'**ils représentent un composé de formules (V), (VI), (VII), (VIII), (IX) et (X) ou un mélange de ces composés, qui referme des dérivés oligomères de ces composés, 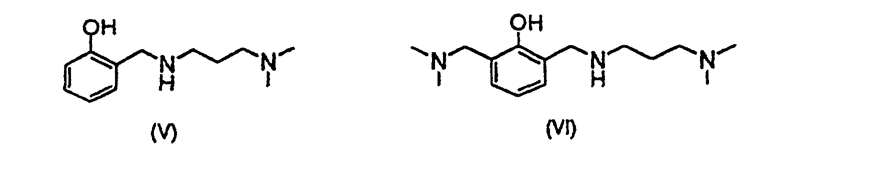 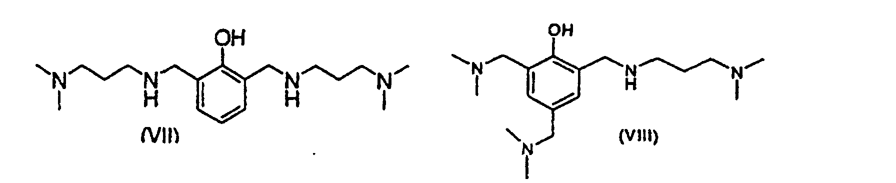 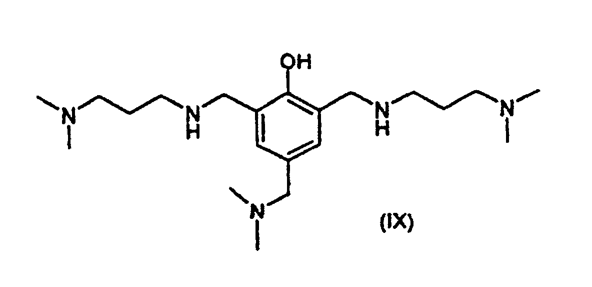 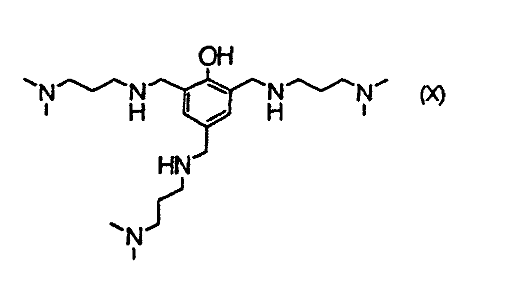 les groupes azotés terminaux portent des restes R₁ et R₂, qui possèdent les significations données à la revendication 1.

9. Composés selon l'une des revendications 1 à 8, **caractérisés en ce qu'**on conduit la réaction de transamination jusqu'à ce qu'au moins un substituant en moyenne par molécule de base de Mannich ait réagi sur le composé de formule (B), de sorte qu'au moins 10 % et au maximum 100 %, de préférence au moins 20 % et au maximum 80 %, de préférence de 50 % à 80 %, de préférence de 60 % à 75 % du substituant di(alkyl en C₁-C₄) aminométhyle présent aient réagi sur le composé de formule (B).

10. Composés selon l'une des revendications 1 à 9, **caractérisés en ce qu'**ils sont transaminés dans une mesure telle que la viscosité du mélange réactionnel se trouve dans le domaine de 0,1 Pa.s à 100 Pa.s (25°C), de préférence dans le domaine de 1 Pa.s à 30 Pa.s (25°C), de préférence <10 Pa.s (25°C).

11. Procédé pour la préparation des composés selon l'une des revendications 1 à 10, **caractérisé en ce qu'**on fait réagir dans une réaction de transamination (a) un composé phénolique substitué (base de Mannich), qui présente au moins un substituant de formule
R₁(R₂)N-CH(R₃)- (A)
(b) avec un composé de formule
R₄(R₅)N-CₙH₂ₙ-(NH-CₙH₂ₙ)_{q}-NH₂ (B)
où R₁, R₂, R₃, R₄ et R₅, n et q possèdent les significations données aux revendications 1 à 8, de façon telle que le composé obtenu présente ou les composés présents dans le mélange obtenu présentent par molécule en moyenne un substituant de formule
R₄(R₅)N-CₙH₂ₙ-(NH-CₙH₂ₙ)_{q}-NH-CH(R₃)-
où les substituants R₃, R₄, R₅, n et q possèdent la signification donnée aux revendications 1 à 8.

12. Procédé selon la revendication 11, **caractérisé en ce que** la réaction de transamination est mise en oeuvre en faisant réagir un composé de formules (IIa), (IIb) ou (III) ou un mélange de ces composés avec un composé de formule (B), de préférence avec la diméthylaminopropylamine.

13. Procédé selon la revendication 11 ou 12, **caractérisé en ce qu'**on conduit la réaction de transamination jusqu'à ce qu'au moins un substituant en moyenne par molécule de base de Mannich ait réagi sur le composé de formule (B), de sorte qu'au moins 10 % et au maximum 100 %, de préférence au moins 20 % et au maximum 80 %, de préférence de 50 % à 80 %, de préférence de 60 % à 75 % des substituants di(alkyl en C₁-C₄)aminométhyle réagissent sur le composé de formule (B).

14. Procédé selon la revendication 11 à 13, **caractérisé en ce qu'**on conduit la réaction de transamination jusqu'à ce que la viscosité du mélange réactionnel se trouve dans le domaine de 0,1 Pa.s à 100 Pa.s (25°C), de préférence dans le domaine de 1 Pa.s à 30 Pa.s (25°C), de préférence, <10 Pa.s (25°C).

15. Composés ou mélanges de composés obtenus selon l'une des revendications 11 à 13.

16. Utilisation des composés selon l'une des revendications 1 à 15 en tant qu'accélérateurs dans des systèmes durcissables, de préférence dans des systèmes durcissables époxy et polyuréthannes.

17. Systèmes durcissables, de préférence systèmes durcissables époxy et polyuréthannes qui renferment un composé selon l'une des revendications 1 à 15 ou un mélange de tels composés.

18. Produits durcis que l'on obtient à partir d'un système durcissable selon la revendication 17.
